# EUROPÄISCHE PATENTANMELDUNG

(11) **EP 2 574 853 A1**
(43) Veröffentlichungstag der Anmeldung: **03.04.2013**
(21) Anmeldenummer: 11007856.5
(22) Anmeldetag: 28.09.2011
(51) Int. Cl.: F24D 12/02, F24D 17/00

(54) **Verfahren und Einrichtung zur Gewinnung von Wärmeenergie aus sowohl in Abwasserkanälen als auch in Abwasserdruckleitungen fliessendem Abwasser**

(71) Anmelder: E.qua Services GmbH, 10243 Berlin (DE)
(72) Erfinder: Die Erfindernennung liegt noch nicht vor
(74) Vertreter: Burghardt, Dieter

(57) **Zusammenfassung**

Die Erfindungsaufgabe, ein Verfahren und eine Einrichtung zur Gewinnung von Wärme aus in einer Abwasserströmung enthaltenen Abwärme mit einer Entnahme von einer belastungsfreien, d.h. von die Wärmeübertragung durch die in der Abwasserströmung mitgeführten, aufgeschwemmten Feststoffen freie Abwasserrate, die einem Wärmetauscher zur Wärmerückgewinnung zugeführt wird, zu entwickeln, wurde dadurch gelöst, dass über eine Pumpenanordnung (7) aus einem unterhalb einer in einer in einem Abwasserkanal (1) oder Abwasserdruckleitung (14) vorgesehenen Strömungsleiteinrichtung (3) angeordneten Sammelraum (8), eine Senkströmung erzeugt wird und dadurch von aufgeschwemmten Feststoffen freies Abwasser über wenigstens einen Zulauf entnommen und, das dann einem vorgesehenen Wärmetauscher (9) zugeführt und nach Durchfließen des Wärmetauschers (9) anschließend als abgekühltes Abwasser wieder in den Abwasserkanal (1) eingespeist wird.

## Beschreibung

Die Erfindung betrifft ein Verfahren und eine Einrichtung zur Gewinnung von Wärme aus häuslichen und gewerblichen Abwässern als Wärmequelle zur Senkung des Primärenergiebedarfs.

Es werden gegenwärtig verschiedene Arten von Wärmeübertragung zur Nutzung von Abwasserwärme zum Einsatz gebracht, die sich in ihrer konstruktiven Gestaltung nach der Art der Wärmequelle richten.

Es ist Stand der Technik, Wärmetauscher in Abwasserkanälen oder Gerinnen einzubauen, um Wärme zwischen dem Abwasser und einer durch den Wärmetauscher strömenden Flüssigkeit zu übertragen. In dem Kanal oder Gerinne strömt das Abwasser an der Außenfläche des Wärmetauschers vorbei. Hierzu sind in den Abwasserkanälen Berohrungen vorgesehen, die eine Baueinheit mit dem Kanalsystem bilden.

Allerdings ist die Strömungsgeschwindigkeit abhängig vom Abwasserdurchfluss durch den Kanal oder durch das Gerinne sowie vom Füllstand darin. Weder der Durchfluss noch der Füllstand sind konstant, so dass keine definierte Strömung vorliegt. Normalerweise ist die Strömungsgeschwindigkeit eine laminare. Nur dann, wenn der Durchfluss, beispielsweise nach einem Regenereignis, stark erhöht ist, herrschen turbulente Strömungsverhältnisse. Wegen des normalerweise geringen Alpha-Wertes an der Außenfläche der Wärmetauscher müssen diese eine große Oberfläche haben. Sie sind verschmutzungsanfällig, insbesondere dann, wenn sie in Rohrabwasserkanälen eingebaut werden.

Aus der DE 101 56 253 A1 ist bekannt, einen Wärmetauscher in einen Brauchwassertank zu integrieren, um die im Brauchwasser vorhandene thermische Energie an anderer Stelle weiter nutzen zu können. Das Brauchwasser muss hierfür in dem Tank zwischengespeichert werden, wobei es vorzugsweise durch Einblasen von Luft umgewälzt wird. Durch diese Umwälzung strömt das Brauchwasser an der Außenfläche eines Wärmetauschers vorbei, wodurch der Wärmeaustausch verbessert und gleichzeitig Verschmutzungen von der Außenfläche des Wärmetauschers abgespült werden sollen.

Auch aus der DE 36 05 585 A1 ist ein in einem Abwasserbehälter eingebauter Wärmetauscher bekannt, an dessen Außenfläche eine konvektive Strömung erzeugt wird. In diesem Fall wird die Strömung durch Bewegen von flexiblen Wandungen des Abwasserbehälters erzeugt.

Insbesondere in stark verschmutzten Abwässern neigt die Wärmetauscheroberfläche jedoch zu einer schnellen Verschmutzung durch Belagbildung, die den Wärmeübergang zwischen Abwasser und Wärmeträger und somit auch den Wirkungsgrad des Wärmetauschers negativ beeinflusst. Speziell bei biologisch belasteten Abwässern wird dieses Phänomen durch verschiedenste biologische Ablagerungen, so genannte Biofilme, zusätzlich verstärkt. Um Ablagerungen von der Oberfläche eines Wärmetauschers zu entfernen, schlägt die EP 0 174 554 A1 vor, die Tauscherflächen regelmäßig mit Hilfe rotierender Bürsten zu reinigen. Zwar kann sich eine definierte Turbulenz positiv auf den genannten Wärmeübergang auswirken. Durch die Rotation kann es jedoch auch zu unkontrollierten Verwirbelungen innerhalb des Abwassers kommen, die diesen Effekt wieder egalisieren.

Auch sind die in der EP 0 174 554 A1 gezeigten Reinigungsbürsten nur für flächige Wärmetauscher geeignet, da nur hier ein sicherer Kontakt zwischen Wärmetauscherfläche und den jeweiligen Borsten der Bürsten gewährleistet ist. Derartige Wärmetauscher weisen jedoch im Verhältnis zu ihrem Volumen eine relativ geringe Wärmetauscheroberfläche auf.

So beschreibt die DE 20 2004 005 768 U1 ein Bauteil bzw. Bauwerk in Art und Form eines Freispiegelrohres oder Kanals, das zur konventionellen Leitung von Wasser bzw. Abwasser bestimmt ist und zusätzlich im Gerinne mit einer Wärmetauschereinrichtung zur Wärmerückgewinnung ausgestattet ist. Das Bauteil bzw. Bauwerk weist nach seiner Herstellung zumindest eine zum Wasser bzw. Abwasser hin offene Montageaussparung in der Wandung des Gerinnes zur Aufnahme einer Wärmtauschereinrichtung auf. Nach dem Einsetzen der Wärmetauschereinrichtung wird diese Montageaussparung verfüllt, so dass die Wärmetauschereinrichtung schließlich innerhalb der Wandung des Kanals angeordnet ist und somit keinen direkten Kontakt mit dem Wasser bzw. Abwasser besitzt. Zwar wird hierdurch eine Verschmutzung der Wärmetauscheroberfläche verhindert, nachteilig hierdurch ist jedoch, dass der Wärmeaustausch zwischen Abwasser und Wärmetauschereinrichtung durch die dazwischen liegende Füllschicht negativ beeinträchtigt wird.

Durch die DE 32 46 586 A1 wird ein alternatives Verfahren zur Rückgewinnung der in häuslichen Abwässern enthaltenen Wärme beschrieben. Hierbei wird die Temperatur des Abwassers innerhalb eines Abwasserrohres ständig überwacht. Sobald die ge - messene Temperatur einen einstellbaren Temperaturwert überschreitet, wird das Abwasser über einen Bypass umgeleitet, in welchem dem Abwasser mit Hilfe eines Wärmetauschers Wärme entzogen wird. Das abgekühlte Abwasser wird anschließend in das Abwasserrohr weitergeleitet. Nachteilig hierbei ist jedoch, dass im Falle der Bypassöffnung das gesamte Abwasser durch diese hindurch und somit auch durch den Wärmetauscher strömen muss. Um eine Verschmutzung des Wärmetauschers zu minimieren, öffnet der Bypass daher erst ab einer bestimmten Temperatur des Abwassers. Hierdurch soll ausgeschlossen werden, dass stark verschmutztes Abwasser, beispielsweise aus einer Toilette, welches in der Regel eine geringere Temperatur als sauberes Abwasser beispielsweise aus einer Dusche aufweist, nicht in den Wärmetauscher gelangt. Eine solche Anordnung ist jedoch für den Einbau in einen Abwasserkanal nicht geeignet, da hier die Wassertemperatur durch die Vermischung zahlreicher Abwässer aus unterschiedlichsten Abwasserquellen relativ konstant und auch die Verschmutzung gleichbleibend hoch ist.

Weiterhin sind offene Abwasserkanbäle in verschiedenen Bauformen aus unterschiedlichen Materialien bekannt. Vom runden Querschnitt, eiförmigen Profilen bis zum Recheckkanal aus den verschiedensten Materialien gibt es viele Varianten. In diesen Rohren werden speziell gefertigte, schalenförmige, doppel-wandige Wärmeübertragungselemente aus Edelstahl eingebracht. Sie werden im Bodenbereich des Abwasserkanales montiert und hydraulisch mit einer Wärmepumpenanlage verbunden. Über diese Halbschalen strömt das Abwasser, in den Halbschalen strömt das Wärmeübertragungsmedium (in der Regel Kaltwasser) zu den Wärmepumpen.

Nach der DE 10 2007 013 296 A1 ist eine Anordnung und Verfahren zur Rückgewinnung von Wärmeenergie aus Abwässern bekannt. In dieser Anmeldung wird vorgeschlagen, dass die Anordnung zur Rückgewinnung von Wärmeenergie neben dem Wärmetauscher und dem Zwischenspeicher eine Pumpvorrichtung aufweist, die dem Zwischenspeicher zugeordnet ist und der Förderung von Abwasser in Richtung des Wärmetauschers dient.

Der Zwischenspeicher ist dabei derart angeordnet, dass das durch den Abwasserkanal strömende Abwasser zumindest teilweise durch den Zulauf in den Zwischenspeicher gelangt. Hierfür liegt der Boden des Zwischenspeichers zweckmäßigerweise tiefer als der Boden des Abwasserkanals, so dass Abwasser auch bei niedrigem Wasserstand innerhalb des Abwasserkanals in den Zwischenspeicher gelangt. Der Zwischenspeicher kann sich dabei im Inneren des Abwasserkanals, beispielsweise durch die Anordnung von entsprechenden Wandungen, oder in einer Nische in der Wand des Abwasserkanals befinden. Letztgenannte Variante hat den Vorteil, dass der Querschnitt des Abwasserkanals nicht durch Einbauten verringert wird. Jedoch ist hierdurch im Vergleich zur ersten Variante ein nachträglicher Einbau in einen bestehenden Abwasserkanal erschwert. Mit Hilfe der Pumpvorrichtung wird schließlich vom Zwischenspeicher warmes Abwasser dem Wärmetauscher zugeführt, der auf übliche Weise mit einem weiteren Sekundärkreislauf verbunden ist, dessen Medium, in der Regel Wasser, erwärmt werden soll.

Nach Passieren des Wärmetauschers fließt das abgekühlte Abwasser über den Ablauf wieder zurück in den Abwasserkanal. Durch die Pumpvorrichtung wird erreicht, dass sich der Wärmetauscher an einer beliebigen Stelle befinden kann. So ist eine Anordnung des Wärmetauschers innerhalb des Zwischenspeichers, aber genauso gut auch oberirdisch, beispielsweise innerhalb eines Gebäudes möglich, wodurch eine besonders einfache Wartung desselben gewährleistet ist.

Nach eienm Ausführungsbeispiel ist eine Filtervorrichtung hierbei als Filterkorb mit einem Siebmantel ausgebildet. Der Zulauf, dem ebenfalls ein Absperrschieber zugeordnet sein kann, ist nach unten hin abgewinkelt, damit der Filterkorb innerhalb des Zwischenspeichers möglichst tief angeordnet werden kann. In dem Filterkorb selbst befindet sich eine über einen Antrieb angetriebene Transportschnecke durch die vom Siebmantel zurückgehaltene Verunreinigungen über ein Verbindungsstück in Richtung des Ablaufs gefördert werden.

Diese Projekte, die nach dieser DE ausgeführt werden, sind bauseits und kostenintensiv sehr aufwendig. Die aus dem Abwasser ausgefilterten Feststoffe müssen abgesondert werden und wieder in den Abwasserstrom zurück geführt werden. Diese Lösung ist auch nur für Abwasserkanäle und nicht für Abwasserdruckleitungen einsetzbar. Außerdem versagt die Lösung nach dieser DE 10 2007 013 296 A1 bei einem geringen Trocken wetterabfluss. Sofern ein zugeringes Abwasseraufkommen vorliegt, kann eine Anlage, die diese Lösung realisiert, nicht mehr betrieben werden, da die Gefahr eines Trockenlaufes besteht und die im Abwasser mitgeführten Feststoffe sich absetzen, wenn zusätzlich Abwasser entnommen wird, das dem Wärmetauscher der Anlage zugeführt werden muss.

Allen bekannten Verfahren und Einrichtungen zur Rückgewinnung von Wärmeenergie aus strömenden Abwässern in Abwasserdruckleitungen haftet der Nachteil an, dass diese Einrichtungen bauaufwendig und nur für bestimmte Kanalausführungen einsatzfähig sind. Außerdem haftet den bekannten Lösungen der Mangel der Uneffektivität an. Die Wärmerückgewinnung von Wärmeenergie aus in Abwasserdruckleitungen fließenmdem Abwasser bestehen derzeit ausschließlich aus Doppelmantelwärmeübertragern, die die Abwasserdruckleitungen umschließen. Die technischen Maßnahmen hierzu sind sehr aufwending und immer mit teueren Nebenleistungen verbunden.

Ziel der Erfindung ist es zu vermeiden, dass eine Vielzahl von auf das jeweilige Kanalprofil abgestimmten Bauelementen zur Wärmeübertragung vorgehalten oder kostenaufwendig gefertigt werden müssen um gleichzeitig den Wirkungsgrad einer Einrichtung zur Gewinnung von Wärme aus Abwasser zu erhöhen.

Der Erfindung liegt die Aufgabe zugrunde, ein Verfahren und eine Einrichtung zur Gewinnung von Wärme durch Energieentzug der in einer Abwasserströmung enthaltenen Abwärme und dazu eine Einrichtung zu entwickeln mit der eine Entnahme von einer belastungsfreien, d.h. von die Wärmeübertragung durch die in der Abwasser-Strömung mitgeführten, aufgeschwemmten Feststoffen freie Abwasserrate, die einem Wärmetauscher zur Wärmerückgewinnung zugeführt wird, möglich ist.

Diese Aufgabe wurde durch die in den unabhängigen Ansprüchen genannten technischen Mittel gelöst.

Die Erfindung soll an einem Ausführungsbeispielnäher erläutert werden. In den zugehörigen Zeichnungen zeigen:
- Fig. 1: einen Abwasserkanal mit einer Strömungsleiteinrichtung mit einer dieser zugeordneten Pumpeneinheit und mit einem Wärmetauscher zur Gewinnung von Wärmeenergie aus Abwasser in einer Schittdarstellung,
- Fig. 2: einen Abwasserkanal mit zwei in einem Abstand angeordneten Strömungsleiteinrichtungen und mit jeder diesen zugeordneten Pumpeneinheiten und mit einem Wärmetauscher zur Gewinnung von Wärmeenergie aus Abwasser in einer Schittdarstellung,

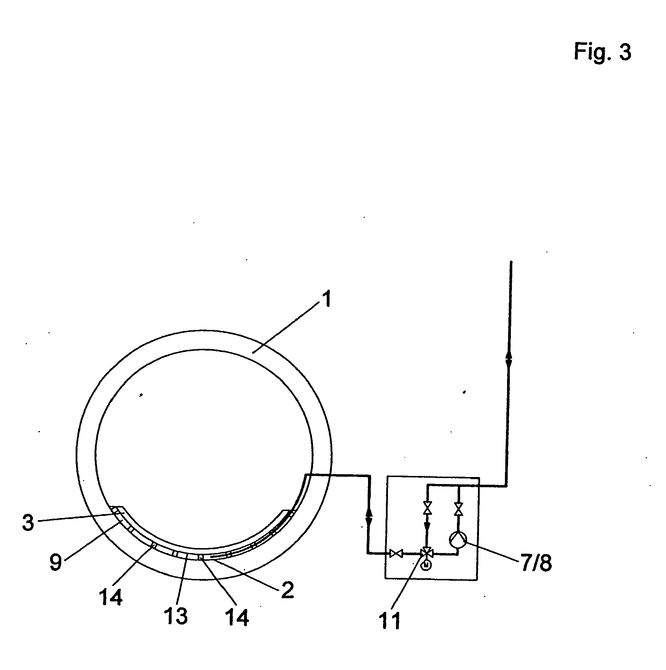

- Fig. 3: einen Abwasserkanal in einer Schnittdarstellung mit einer eingebauten Strömungsleiteinrichtung und mit einer hydaulisch zugeordneten Pumpeneinheit,

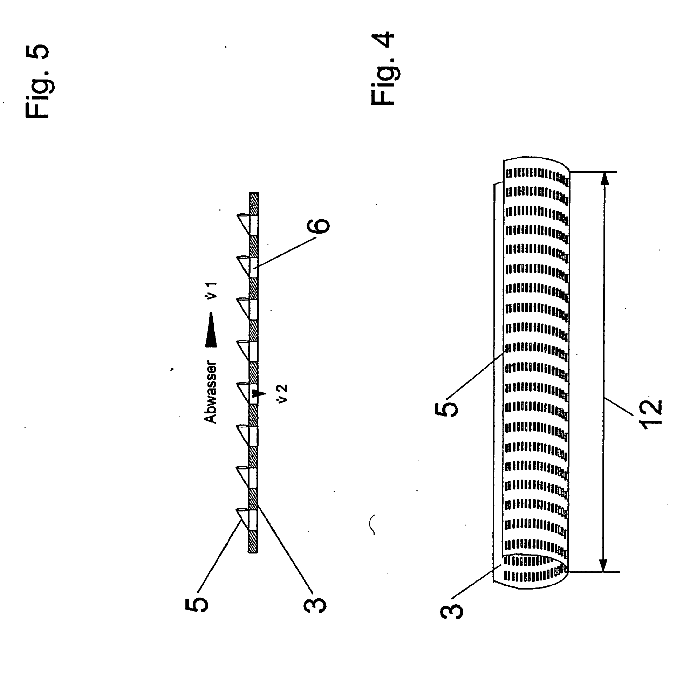

- Fig. 4: eine der Trennung des Abwasserstromes dienenden Strömungsleiteinrichtung in perspektivischer Darstellung,
- Fig. 5: einen Längsschnitt durch die Strömungsleiteinrichtung nach Fig. 4,
- Fig. 6: eine erfindungsgemäß ausgebidete Einrichtung zur Wärmeenergiegewinnung aus Abwasser in einer Zuordnung zu einer Abwasserdruckleitung (ADL),
- Fig. 7: einen Abwasserkanal mit zwei in einem Abstand angeordneten Strömungsleiteinrichtungen nach Fig. 2 mit einer zusätzlichen Einrichtung zur Realisierung eines Spülvorgenages an den Strömungsleiteinrichtungen.

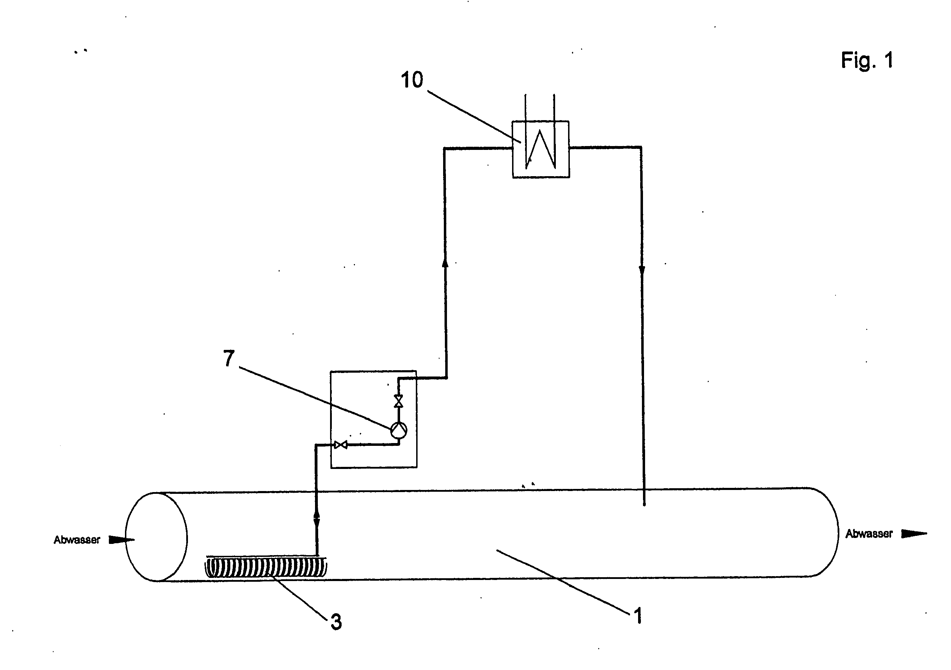

In einer in Fig. 1 dargestellten erfindungsgemäß ausgebildeten Einrichtung zur Gewinnung von Wärmeenergie aus in einem Abwasserkanal 1 mit einer üblichen Strömungsgeschwindigkeit von ca. 0,5 m/s fließendem Abwasser ist auf der Kanalsole 2 eine Strömungsleiteinrichtung 3 mit einem definierten Abstand 4 zur Kanalsole 2 vorgesehen. Die Strömungsleiteinrichtung 3 weist in Strömungsrichtung keilförmig, im Winkel von ca. 30° angestellte, die Strömungsrichtung bestimmende und aus der Strömungsleiteinrichtung 3 herausgebogene Zungen 5 auf, wobei sich der Anstellwinkel der Zungen 8 nach der Strömungsgeschwindigkeit des Abwassers im Abwasserkanal 1 richtet. Unterhalb dieser Zungen 5 befinden sich Durchströmöffnungen 6, wobei jede in der Ausbildung die geometrische Form der Zungen 5 aufweist. Durch die Zungen 5 wird das mit aufgeschwemmten Feststoffen belastete Abwasser in seiner Strömungsrichtung beeinflußt und es bildet sich hinter jeder ausgestellten Zunge 5 ein geringer Unterdruck nach dem Injektorprinzip aus. Dieser Unterdruck wird durch eine Pumpeinrichtung 7 oder 8 in einem Sammelraum 9, der mit dem Abstand 4 zur Kanalsole 3 vorgesehen ist, erzeugte Senkströmung überwunden. Hierdurch fließt von aufgeschwemmten Feststoffen befreites Abwasser nahezu drucklos durch die Durchströmöffnungen 6 mit einer Fließgeschwindigkeit von ca. 0,05 m/s in den Sammelraum 9, aus dem es durch wahlweise in Funk-tion gesetzte Pumpeinrichtunmgen 7, 8 abgesaugt und dann einem extern angeordneten Wärmetauscher 10 zugeführt wird, wobei den Pumpeneinrichtungen 7 und 8 zugeordnete Umschaltarmaturen 11 in den Pumpeinrichtungen 7, 8 vorgesehen sind. Nach dem Durchströmen des Wärmetauscher 10 wird das abgekühlte Abwasser wieder in den Abwasserkanal 1 eingespeist.

Die Strömungsleiteinrichtung 3 ist als erfolgsverbürgendes Mittel für die Absonderung von von aufgeschwemmten Feststoffen befreitem Abwasser aus dem mit Feststoffen belasteten Abwasser schalenförmig ausgebildet und verfügt über eine auf die Leistungsfähigkeit der erfindungsgemäß ausgebildeten Einrichtung zur Gewinnung von Wärme aus Abwasser über eine definierte Länge 12 mit einer definierte Anzahl von Zungen 5 und weist eine der Anzahl von Zungen 5 entsprechenden Anzahl, der Durchströmung einer Rate von von aufgeschwemmten Feststoffen befreitem Abwasser dienenden Durchströmöffnungen 6 auf. Die Zungen 5 sind unregelmäßig in der Strömungsleiteinrichtung 3 angeordnet. Die Strömungsleiteinrichtung 3 ist an einer Unterseite 13 mit Abstandsböcken 14 versehen und liegt dadurch mit einem Abstand 4 auf der Kanalsole 2 auf. Mit nicht dargestellten Abkantungen ist die Strömungsleiteinrichtung 3 gegenüber der inneren Oberfläche der Kanalsole 2 abgedichtet und mit bekannten technischen Mitteln dort gehaltert. Über die Durchströmöffnungen 6 der Strömungsleiteinrichtung 3 können bei einer vorgesehenen Gesamtgröße von 0,79 m² 141 m³/h durchströmen. Diese Durchströmleistung bestimmt die Baugröße der erfindungegemäß ausgebildeten Einrichtung zur Gewinnung von Wärmeenergie aus Abwasser.

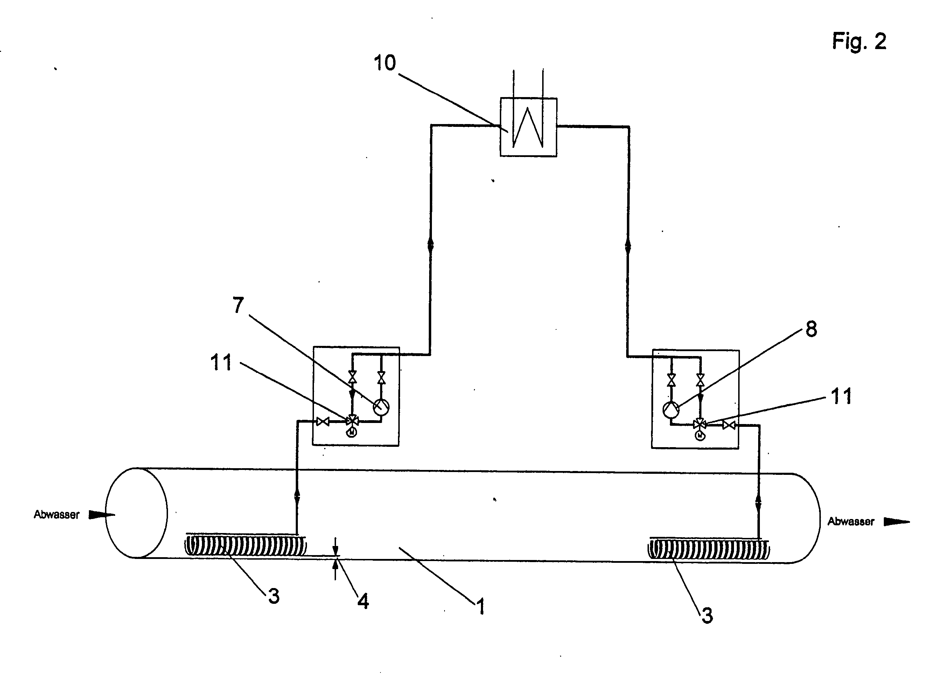

Nach einer in Fig. 2 dargestellten Ausführungsform der erfinderischen Lösung befinden sich in einem frei wählbaren Abstand im Abwasserkanal 1 zwei gleichartig ausgebildete Strömungsleiteinrichtungen 3. Diese Variante der erfinderischen Lösung ermöglicht es, einen Trockenlauf des Abwasserkanals 1 bei einem geringen Abwasseraufkommen durch Entnahme einer Abwasserrate zwecks Zuführung zu dem Wärmetauscher 10 zur Gewinnung von Wärmeenergie zu verhindern, indem sowohl über die erste in Strömungsrichtung liegende Strömungsleiteinrichtung 3 als auch über die zweite in Strömungsrichtung liegende Strömungsleiteinrichtung 3 eine Abwasserrate entnommen werden kann. Im ersten Fall erfolgt die Rückspeisung der entnommenen abgkühlten Abwasserrate in Strömungsrichtung nach der Entnahme einer Abwasserrate. Im zweiten Fall erfolgt die Rückspeisung der entnommenen abgekühlten Abwasserrate in Strömungsrichtung vor der Entnahme der Abwasserrate.

Zur Rückeinspeisung ist in dieser Ausführungsvariante nach Fig. 2 eine weitere Pumpeneinrichtung 8 vorgesehen, die gleichfalls eine Senkströmung erzeugt. Der Wahl der Entnahme folgt jeweils eine Stillsetzung einer Pumpeneinrichtung 7 oder 8, wobei die Strömungsrichtung durch den Pumpeneinrichtung 7, 8 zugeordnete Umkehrarmaturen 11 gesteuert wird. Hierdurch wird dem Rückspeisestrom nach Wärmeentzug unabhängig davon, ob die Rückeinspeisung vor oder nach der Entnahme einer Abwasserrate aus dem Abwasser erfolgt, eine definierte Flussrichtung aufgezwungen.

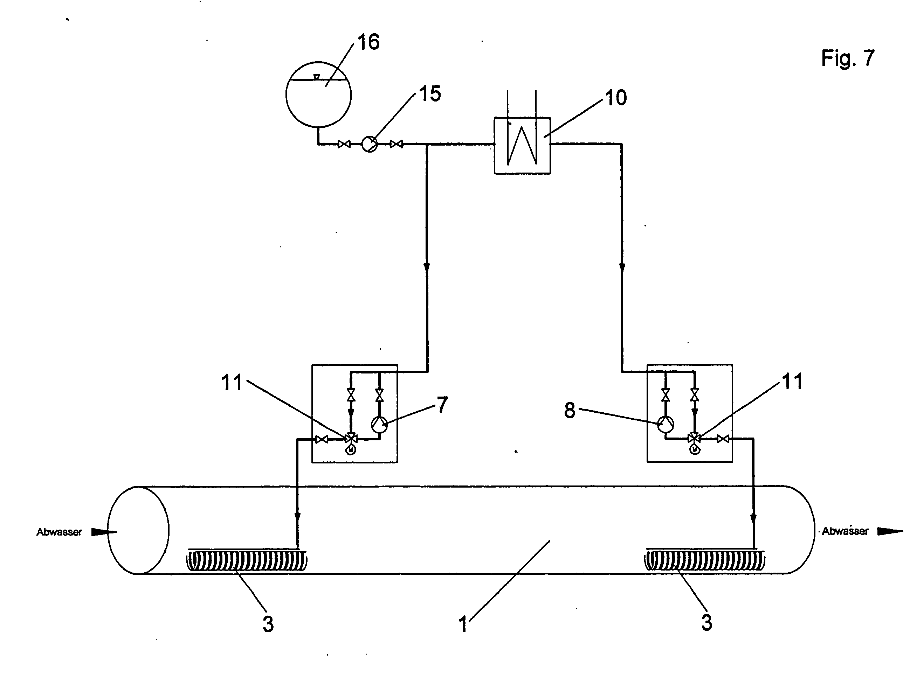

Zur Reinigung der Strömungsleiteinrichtungen 3 ist, wie in Fig. 7 dargestellt, eine der Reinigungsspülung dienende Spülpumpe 15 vorgesehen, der ein Spülwasserbehälter 16 zugeordnet ist, aus dessen Spülwasservorrat die Strömungsleiteinrichtungen 3 beaufschlagt werden.

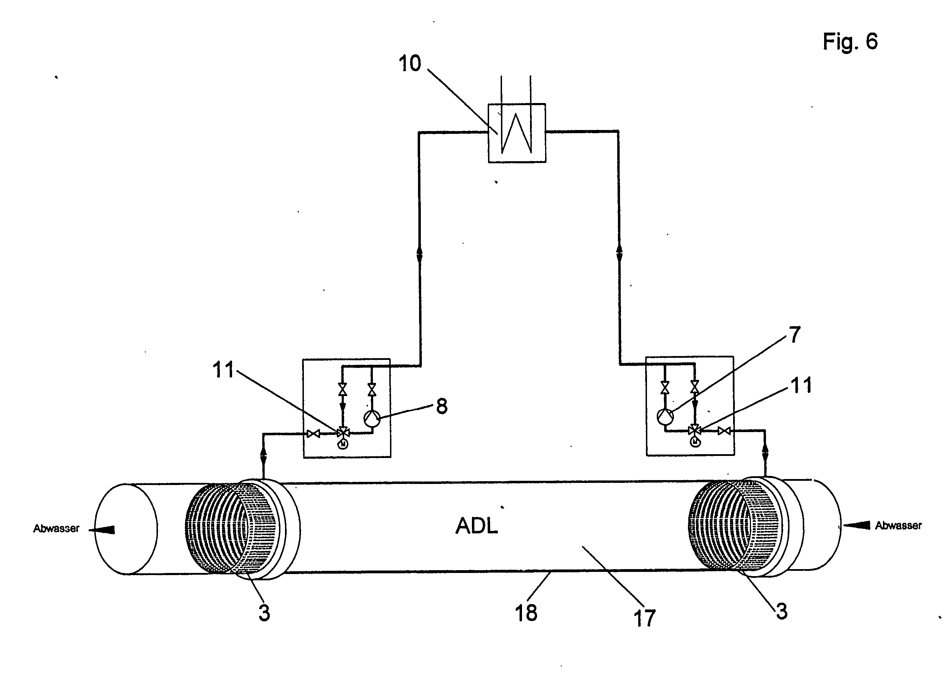

Nach einer in Fig. 6 dargestellten Ausführungsform wird die erfindungsgemäße Lösung in stets mit Abwasser voll gefüllten Abwasserdruckleitungen 17 eingesetzt. In dieser Ausführungsvariante sind die Strömungsleiteinrichtungen 3 ringförmig ausgebildet und liegen unter Verwendung von Abstandsböcken 14 mit einem Abstand 4 an einer gesamten Innenfläche 18 der Abwasserdruckleitung 17 an. Die Lagefixierung der ringförmig ausgebildeten Strömungsleiteinrichtung 3 erfolgt in der Abwasserdruckleitung 17 beispielsweise durch nicht dargestellte Spannringe, mit denen eine Spreizwirkung erzielt wird und so über die Strömungsleiteinrichtungen 3 eine Druckkraft auf die Innenfläche 18 der Abwasserdruckleitung 17 besteht. Die Strömungsleiteinrichtungen 3 entsprechen in der Ausbildung betreffend der Anordnung der Zungen 5 und der nicht dargestellten Abkantungen zur Erzielung einer Abdichtung der Strömungsleiteinrichtung 3 gegenüber de Innenfläche 18 der Abwasserdruckleitung 17 der Ausführung nach Fig. 1 und 2. Der weitere Aufbau der Einrichtung zur Gewinnung von Wärem aus Abwasser entspricht auch dem Aufbau der Einrichtung nach Fig. 2.

Die erfindungsgemäß ausgebildete Einrichtung zur Gewinnung von Wärmeenergie aus Abwasser läßt es zu, dass die Strömungsleiteinrichtungen 3 in vorhandene Abwasserkanäle 1 nachträglich mit geringem Bauaufwand eingebaut werden können. Bei dem Einsatz erfindungsgemäß ausgebildeter Einrichtungen zur Gewinnung von Wärmeenergie in einer Abwasserdruckleitung 17 ist es erforderlich, einen Rohrabschnitt der Abwasserdruckleitung 17 gegen ein vorgefertigtes Rohrstück auszutauschen und dieses über nicht dargestellte Flanschverbindungen in die Abwasserdruckleitung 17 einzubinden.

Weitere Vorteile der erfindungsgemäß ausgebildeten Einrichtung zur Gewinnung von Wärmeenergie aus Abwasser bestehen darin, dass höchst mögliche Wärmeleistungen realisiert werden können, die mit Anlagen nach dem Stand der Technik nicht erreichbar sind. Außerdem erfordert die erfindungsgemäß ausgebildete Einrichtung einen geringen Materialeinsatz.

Die verwirklichten Ausführungsvarianten einer Einrichtung zur Gewinnung von Wärme aus Abwasser realisieren das vorgeschlagene Verfahren zur Gewinnung von Wärmeenergie aus Abwasser mittels eines Wärmetauschers 10, indem über eine Pumpenanordnung 7 bzw. 8 unterhalb von einer im Abwasserkanal 1 angeordneten Strömungsleiteinrichtung 3 eine Senkströmung erzeugt wird und dadurch von aufgeschemmten Feststoffen befreites Abwasser aus einem Abwasserkanal 1 über wenigstens einen Zulauf entnommen wird, das dem vorgesehenen Wärmetauscher 10 zugeführt und anschließend das abgekühlte Abwasser nach Durchfließen des Wärmetauschers 10 wieder in den Abwasserkanal 1 eingespeist wird.

### Aufstellung der verwendeten Bezugszeichen

- 1: Abwasserkanal
- 2: Kanalsole
- 3: Strömungsleiteinrichtung
- 4: Abstand
- 5: Zungen
- 6: Durchströmöffnung
- 7: Pumpeinrichtung
- 8: Pumpeinrichtung
- 9: Sammelraum
- 10: Wärmetauscher
- 11: Umkehrarmatur
- 12: Länge
- 13: Unterseite
- 14: Abstandsbock
- 15: Spülpumpe
- 16: Spülwasserbehälter
- 17: Abwasserdruckleitung
- 18: Innenfläche

## Patentansprüche

1. Verfahren zur Gewinnung von Wärmeenergie aus sowohl in einem Abwasserkanal als auch in einer Abwasserdruckleitung fließenden Abwässern, mittels mindestens eines vorgesehenen Wärmetauschers (9), **dadurch gekennzeichnet, dass** über eine Pumpenanordnung (7) aus einem unterhalb einer Strömungsleiteinrichtung (3) angeordneten Sammelraum (8), wobei die Strömungsleiteinrichtung (3) in einem Abwasserkanal (1) oder in einer Abwasserdruckleitung (14) angeordnet ist, eine Senkströmung erzeugt wird und dadurch von aufgeschwemmten Feststoffen freies Abwasser aus einem Abwasserkanal (1) oder aus einer Abwasserdruckleitung (14) über wenigstens einen Zulauf entnommen und, das dann einem vorgesehenen Wärmetauscher (9) zugeführt wird und nach Durchfließen des Wärmetauschers (9) anschließend das abgekühlte Abwasser wieder in den Abwasserkanal (1) eingespeist wird.

2. Verfahren zur Gewinnung von Wärmeenergie aus sowohl in einem Abwasserkanal als auch in einer Abwasserdruckleitung fließenden Abwässern, mittels wenigstens eines vorgesehenen Wärmetauschers (9), **dadurch gekennzeichnet, dass** alternativ bei gleichzeitiger Stillsetzung der Pumpenanordnung (7) mittels einer weiteren Pumpenanordnung (13) aus einem unterhalb einer in Strömungsrichtung nachgeordneten Strömungsleiteinrichtung (3) angeordneten Sammelraum (8) eine Senkströmung erzeugt wird und dadurch von aufgeschwemten Feststoffen freies Abwasser aus einem Abwasserkanal (1) oder aus einer Abwasserdruckleitung (14) über wenigstens einen Zulauf () entnommen wird, wobei bei gleichzeitiger Stillsetzung der Pumpenanordnung (7) nach Umkehrung der ursprünglichen Strömungsrichtung im Abwasserentnahmekreis einem Wärmetauscher (9) zugeführt wird und die Rückeinleitung von abgekühltem Abwasser vor einer Entnahme von aufgeschwemmten Feststoffen freiem Abwasser aus einem Abwasserkanal (1) oder aus einer Abwasserdruckleitung (14) wieder in den Abwasserkanal (1) oder in die Abwasserdruckleitung (14) über eine vorgesehene Strömungsleiteinrichtung (3) eingespeist wird.

3. Verfahren nach Anspruch 2, **dadurch gekennzeichnet, dass** die Entnahme von aufgeschwemmten Feststoffen freiem Abwasser aus einem Abwasserkanal (1) entweder in Strömungsrichtung des Abwassers und die Rückspeisung des abgekühlten Abwassers nach der Entnahme das Abwassers aus dem Abwasserkanal (1) oder die Entnahme einer Abwasserrate aus dem Abwasserkanal (1) nach der Rückspeisung des abgekühlten Abwassers nach dem Gegenstrom-Prinzip erfolgt und damit ein bei geringem Abwasseraufkommen eintretendes Trockenlaufen des Abwasser-kanals (1) zur Vermeidung von Ablagerungen von Feststoffen verhindert wird.

4. Verfahren nach Anspruch 1 bis 3, **dadurch gekennzeichnet, dass** die Strömungsleiteinrichtung (3) im Abwasserkanal (1) bei einer Verschmutzung durch eine Gegenspülung von dieser befreit wird, indem die Strömungsleiteinrichtung (3) mit unter Druck stehenden kurzen Wasserstößen im Gegenstrrom beaufschlagt wird und das Sprülwasser dann in den Abwasserkanal (1) abfließt.

5. Verfahren nach Anspruch 1 bis 4, **dadurch gekennzeichnet, dass** bei Anordnung von zwei im Abstand zueinander im Abwasserkanal (1) oder in der Abwasserdruckleitung (14) vorgesehenen Strömungsleiteinrichtungen (3) der Spülvorgang über die in den Pumpeneinrichtungen (7, 8) installierten Umkehrarmatur (11) vorgenommen wird, wobei entweder beide Strömungsleiteinrichtungen (3) gleichzeitig oder jeweils nur eine Strömungsleiteinrichtung (3) infolge beaufschlagt wird, wobei die jeweilige Förderpumpe in den Pumpeneinrichtungen (7, 8) dann außer Funktion gesetzt ist.

6. Einrichtung zur Durchführung des Verfahrens nach Anspruch 1 bis 5, **dadurch gekennzeichnet, dass** zur Gewinnung von Wärmeenergie aus in einem Abwasserkanal (1) oder in einer Abwasserdruckleitung (17) fließendem Abwasser im Abwasserkanal (1) oder in der Abwasserdruckleitung (17) an einer Entnahmestelle von Abwasser eine Strömungsleiteinrichtung (3) und zwischen der Strömungsleiteinrichtung (3) und der Kanalsole (2) ein Sammelraum (9) mit einem definiertem Abstand (4) zur Kanalsole (2) vorgesehen ist.

7. Einrichtung zur Durchführung des Verfahrens nach Anspruch 1 bis 6, **dadurch gekennzeichnet, dass** zur Gewinnung von Wärmeenergie aus in einem Abwasserkanal (1) fließendem Abwasser im Abwasserkanal (1) sowohl an einer Entnahmestelle von Abwasser und zur Rückeinspeisung von abgekühlten Abwasser als auch bei Entnahme mit einer Rückeinspeisung von abgekühlten Abwasser im Gegenstromprinzip in dem Abwasserkanal (1) je eine Strömungsleiteinrichtung (3) und zwischen jeder Strömungsleiteinrichtung (3) und Kanalsole (2) ein Sammelraum (9) mit einem definierten Abstand (4) zur Kanalsole (2)vorgesehen ist.

8. Einrichtung zur Durchführung des Verfahrens nach Anspruch 1 bis 7, **dadurch gekennzeichnet, dass** zur Gewinnung von Wärmeenergie aus in einem Abwasserkanal (1) oder in einer Abwasserdruckleitung (17) fließendem Abwasser im Abwasserkanal (1) oder in der Abwasserdruckleitung (14) sowohl an einer Entnahmestelle von Abwasser als auch bei der Rückeinspeisung von abgekühlten Abwasser je eine Strömungsleiteinrichtung (3) und zwischen jeder Strömungsleiteinrichtung (3) ein Sammelraum (9) mit einem definierten Abstand (4) zur Kanalsole (2) vorgesehen ist.

9. Einrichtung nach Anspruch 6 bis 8, **dadurch gekennzeichnet, dass** der unterhalb der Strömungsleiteinrichtung (3) saugseitig angeordnete Sammelraum (9) zur Erzeugung einer Senkströmung mit einer, eine Abwassersaugpumpe aufweisenden Pumpeinrichtung (7) und diese Pumpeinrichtung (7) mit einem Wärmetauscher (10) verbunden ist, wobei eine weitere nachgeschaltete Pumpeneinrichtung (8) sich im Stillstand befindet.

10. Einrichtung nach Anspruch 6 bis 9, **dadurch gekennzeichnet, dass** sowohl der saugseitig unterhalb der Strömungsleiteinrichtung (3) angeordnete Sammelraum (9) zur Erzeugung einer Senkströmung mit einer eine Abwassersaugpumpe aufweisenden Pumpeinrichtung (8) vorgesehen und diese mit einem Wärmetauscher (10) verbunden ist, wobei sich die vorgeordnete Pumpeneinrichtung (7) im Stillstand befindet und zur Rückeinleitung des aus dem Abwasserkanal (1) entnommenen Abwassers über eine der Pumpeneinrichtung (7) zugeordnete Strömungsleiteinrichtung (3) mit Sammelraum (9) vorgesehen ist.

11. Einrichtung nach Anspruch 6 bis 10, **dadurch gekennzeichnet, dass** je eine die Reinigungsspülung bewirkende Spülpumpe () für eine Strömungsleiteinrichtung (3) vorgesehen ist, wobei der Spülpumpe (15) ein Spülwasservorratsbehälter (16) zugeordnet ist.

12. Einrichtung nach Anspruch 6 bis 11, **dadurch gekennzeichnet, dass** die Pumpeinrichtungen (7, 8) mit Umschaltarmaturen (11) ausgerüstet sind.

13. Einrichtung nach Anspruch 6 bis 12, **dadurch gekennzeichnet, dass** die Umschaltarmaturen (11) der Pumpeinrichtungen (7, 8) aus 3-Wegeventilen bestehen.

14. Einrichtung nach Anspruch 6 bis10, **dadurch gekennzeichnet, dass** der Wärmeübertrager (10) mit einer bekannten Reinigungseinrichtung zur Beseitigung eines entstehenden, durch Bakterien hervorgerufenen, Biofilms ausgerüstet ist.

15. Einrichtung nach Anspruch 6 bis 14, **dadurch gekennzeichnet, dass** die Strömungsleiteinrichtung (3) zur Anordnung im Abwasserkanal (1) koaxsial angeordnet ist und in der geometrischen Form schalenförmig in der Form auf die Kanalsole (2) ausgebildet ist und gegenüber dieser im Abwasserkanal (1) durch Abstandsböcke (14) auf einen definierten Abstand (4) unter Ausbildung eines Sammelraumes (8) angeordnet ist, wobei die koaxiale Ausdehnung der Strömungsleiteinrichtung (3) leistungsabhängig und mit einer von dem zu erwartenden Abwasserhöchststand abhängigen Abdeckung der Kanalsole (2) ausgebildet ist.

16. Einrichtung nach Anspruch 6 bis 8 und 15, **dadurch gekennzeichnet, dass** die Strömungsleiteinrichtung (3) mit in Strömungsrichtung keilförmig herausgebogene , im Winkel von ca. 30° angestellten, die Strömungsrichtung bestimmenden Zungen (5) versehen ist.

17. Einrichtung nach Anspruch 6 bis 8 und 16, **dadurch gekennzeichnet, dass** die Zungen (5) in den geometrischen Abmessungen auf die Strömungsgeschwindigkeit des Abwassers im Abwasserkanal (1) und auf die im Abwasserdruckleitung (17) abgestimmt ausgebildet sind.

18. Einrichtung nach Anspruch 6 bis 8 und 16, **dadurch gekennzeichnet, dass** die Strömungsleiteinrichtung (3) unterhalb der Zungen (5) Durchströmöffnungen (6) für den Durchfluss des von aufgeschwemmten Feststoffen befreiten Abwassers aufweist, die in den geometrischen Abmessungen der Form der Zungen (5) entsprechen.

19. Einrichtung nach Anspruch 6 bis 8 und 16 bis 18, **dadurch gekennzeichnet, dass** die in der Abwasserdruckleitung (17) angeordneten Strömungsleiteinrichtungen (3) als Hohlsylinder mit einer definierten axialen Ausdehnung ausgebildet sind und durch vorgesehene Abstandsböcke (12) gegenüber einer Innenfläche (18) der Abwasserdruckleitung (17) koaxial fixiert sind.

20. Einrichtung nach Anspruch 6 bis 8 und 19, **dadurch gekennzeichnet, dass** zur Gewinnung von Wärmeenergie aus in einer Abwasserdruckleitung (17) fließendem Abwasser die Abwasserdruckleitung (17) ein geflanschtes Rohrstück aufweist, in dem die Strömungsleiteinrichtungen (3) vorgesehen sind.
